# EUROPEAN PATENT APPLICATION

(11) **EP 4 725 676 A1**
(43) Date of publication of application: **15.04.2026**
(21) Application number: 24205988.9
(22) Date of filing: 10.10.2024
(51) Int. Cl.: B29C 45/26, B29C 45/00, B29C 45/33, B29L 31/56, B29L 31/00

(54) **INJECTION MOLD FOR TPE PLUNGER STOPPER**

(71) Applicant: Becton, Dickinson and Company, Franklin Lakes, NJ 07417 (US)
(72) Inventor: FLIPPE, Marc, 38640 CLAIX (FR); LAVIGNE, Ferdinand, 38170 Seyssinet-Pariset (FR)
(74) Representative: Germain Maureau

(57) **Abstract**

A mold assembly (25) for forming a stopper (10), including a first mold plate (26) defining a cavity therein configured to form a distal end of the stopper and at least a portion of a first rib (20a) extending around a perimeter of the stopper; a second mold plate (28) defining a cavity therein configured to form a portion of the stopper, and a distal surface that abuts at least a portion of the first mold plate, wherein the distal surface is configured to form a first portion of a substantially planar surface of the first rib; and a third mold plate (30) defining a cavity therein configured to form a portion of the stopper, and a distal surface that abuts at least a portion of the first mold plate, wherein the distal surface of the third mold plate is configured to form a second portion of the substantially planar surface of the first rib.

## Description

### BACKGROUND OF THE INVENTION

### Field of the Invention

The present disclosure is directed to stoppers for use with injection devices, such as syringes, cartridges, and/or auto-injectors, and related systems and methods of manufacturing.

### Description of Related Art

Syringes, either prefilled or prefillable, auto-injectors, and other types of injection devices, often require slow and controlled initiation and maintenance of sliding movement of one surface over another surface (e.g., a stopper and/or plunger moving through a barrel or container of medicament) for reliable dispensing processes. Stoppers with consistent gliding properties and performance within either a filled or empty syringe are directly related to an important parameter of the syringe - the injection time of the drug contained in the syringe. This key parameter is especially important for syringes used in auto-injectors, as it must comply with a defined injection time. Some stopper designs may include high variability regarding their gliding performances which may be linked to the diameter, shape, and eccentricity of trimming surfaces resulting from manufacturing processes, which can result in undesirable variations and lack of uniformity in resulting injection times.

For example, conventional two-part stopper molds define a cavity for forming a stopper that clamp and retract to in lateral direction (e.g., perpendicular to a longitudinal axis of the stopper). During the manufacturing process, an elastomeric material is placed within a portion of the cavity of the two mold halves, and the mold halves are compressed under substantial pressure to form the stopper. The excess material compressed between the mold halves extends as a flash or trim member at the joints or split lines of the mold halves that extend along the formed stopper in a direction parallel to the longitudinal axis of the stopper. As a result, the flash or trim member traverses many functional surfaces of the stopper, including ribs, tops, bottoms, sidewalls, etc., some of which form the critical sealing surfaces of the stopper when in use with a syringe, container, or the like. Various methods have been developed for removing the flash, however, such removal may result in tolerance problems, inconsistencies, and adverse effects upon the sealing/gliding surface.

The present disclosure provides stoppers and related sealing surfaces incorporating or including mold joints or split lines to improve or provide stopper geometries with consistent sealing and gliding characteristics.

### SUMMARY OF THE INVENTION

In accordance with one aspect, the present disclosure provides a mold assembly for forming a stopper, comprising a first mold plate defining a cavity therein configured to form a distal end of the stopper and at least a portion of a first rib extending around a perimeter of the stopper; a second mold plate defining a cavity therein configured to form a portion of the stopper, and a distal surface that abuts at least a portion of the first mold plate, wherein the distal surface is configured to form a first portion of a substantially planar surface of the first rib; and a third mold plate defining a cavity therein configured to form a portion of the stopper, and a distal surface that abuts at least a portion of the first mold plate, wherein the distal surface of the third mold plate is configured to form a second portion of the substantially planar surface of the first rib.

In some non-limiting embodiments or aspects, the distal surfaces of each of the second and third mold plates may be planar and substantially perpendicular to a longitudinal axis of the stopper.

In some non-limiting embodiments or aspects, the first mold plate may be movable with respect to the second mold plate in a direction substantially parallel to a longitudinal axis of the stopper.

In some non-limiting embodiments or aspects, the second mold plate may be movable with respect to the third mold plate in a direction substantially perpendicular to the longitudinal axis of the stopper.

In some non-limiting embodiments or aspects, the second and third mold plates may combine to form a first joint with the first mold plate, and the first joint may extend around a portion of the stopper with a diameter less than a diameter of the first rib.

In some non-limiting embodiments or aspects, the first joint may be substantially perpendicular to a longitudinal axis of the stopper.

In some non-limiting embodiments or aspects, the second mold plate may be positionable to abut the third mold plate to define a second joint, and the second joint may extend across a portion of the stopper with a diameter less than a diameter of the first rib.

In some non-limiting embodiments or aspects, the second joint may be substantially parallel to a longitudinal axis of the stopper.

In some non-limiting embodiments or aspects, the first mold plate may be configured to form a contoured outer surface of the first rib defining a largest diameter of the stopper.

In some non-limiting embodiments or aspects, the assembly may include a fourth mold plate defining a cavity therein configured to form a proximal end of the stopper.

In some non-limiting embodiments or aspects, the second and third mold plates may each be movable with respect to the fourth mold plate in a direction substantially parallel to a longitudinal axis of the stopper.

In some non-limiting embodiments or aspects, the fourth plate may be configured to form at least a portion of a second rib extending around a perimeter of the stopper.

In some non-limiting embodiments or aspects, the second mold plate may define a proximal surface that abuts at least a portion of the fourth mold plate, and/or the proximal surface may be configured to form a first portion of a substantially planar surface of the second rib.

In some non-limiting embodiments or aspects, the third mold plate may define a proximal surface that abuts at least a portion of the fourth mold plate, and/or the proximal surface of the third mold plate may be configured to form a second portion of the substantially planar surface of the second rib.

In some non-limiting embodiments or aspects, the proximal surfaces of each of the second and third mold plates may be planar and substantially perpendicular to a longitudinal axis of the stopper.

In accordance with one aspect, the present disclosure provides a method of manufacturing a stopper with the mold assembly described above, comprising depositing a thermoplastic material into at least one of the first mold plate, second mold plate, or third mold plate; and forming the thermoplastic material into the stopper within the first, second, and third mold plates.

Further examples of the present disclosure will now be described in the following numbered clauses.

Clause 1: A mold assembly for forming a stopper, comprising: a first mold plate defining a cavity therein configured to form a distal end of the stopper and at least a portion of a first rib extending around a perimeter of the stopper; a second mold plate defining a cavity therein configured to form a portion of the stopper, and a distal surface that abuts at least a portion of the first mold plate, wherein the distal surface is configured to form a first portion of a substantially planar surface of the first rib; and a third mold plate defining a cavity therein configured to form a portion of the stopper, and a distal surface that abuts at least a portion of the first mold plate, wherein the distal surface of the third mold plate is configured to form a second portion of the substantially planar surface of the first rib.

Clause 2: The mold assembly of clause 1, wherein the distal surfaces of each of the second and third mold plates are planar and substantially perpendicular to a longitudinal axis of the stopper.

Clause 3: The mold assembly of clause 1 or clause 2, wherein the first mold plate is movable with respect to the second mold plate in a direction substantially parallel to a longitudinal axis of the stopper.

Clause 4: The mold assembly of any of clauses 1-3, wherein the second mold plate is movable with respect to the third mold plate in a direction substantially perpendicular to the longitudinal axis of the stopper.

Clause 5: The mold assembly of any of clauses 1-4, wherein the second and third mold plates combine to form a first joint with the first mold plate, and wherein the first joint extends around a portion of the stopper with a diameter less than a diameter of the first rib.

Clause 6: The mold assembly of any of clauses 1-5, wherein the first joint is substantially perpendicular to a longitudinal axis of the stopper.

Clause 7: The mold assembly of any of clauses 1-6, wherein the second mold plate is positionable to abut the third mold plate to define a second joint, and wherein the second joint extends across a portion of the stopper with a diameter less than a diameter of the first rib.

Clause 8: The mold assembly of any of clauses 1-7, wherein the second joint is substantially parallel to a longitudinal axis of the stopper.

Clause 9: The mold assembly of any of clauses 1-8, wherein the first mold plate is configured to form a contoured outer surface of the first rib defining a largest diameter of the stopper.

Clause 10: The mold assembly of any of clauses 1-9, further comprising a fourth mold plate defining a cavity therein configured to form a proximal end of the stopper.

Clause 11: The mold assembly of clause 10, wherein the second and third mold plates are each movable with respect to the fourth mold plate in a direction substantially parallel to a longitudinal axis of the stopper.

Clause 12: The mold assembly of clause 10 or clause 11, wherein the fourth plate is configured to form at least a portion of a second rib extending around a perimeter of the stopper.

Clause 13: The mold assembly of clause 12, wherein the second mold plate defines a proximal surface that abuts at least a portion of the fourth mold plate, wherein the proximal surface is configured to form a first portion of a substantially planar surface of the second rib; and wherein the third mold plate defines a proximal surface that abuts at least a portion of the fourth mold plate, and wherein the proximal surface of the third mold plate is configured to form a second portion of the substantially planar surface of the second rib.

Clause 14: The mold assembly of clause 13, wherein the proximal surfaces of each of the second and third mold plates are planar and substantially perpendicular to a longitudinal axis of the stopper.

Clause 15: A method of manufacturing a stopper with the mold assembly of any of clauses 1-14, comprising: depositing a thermoplastic material into at least one of the first mold plate, second mold plate, or third mold plate; and forming the thermoplastic material into the stopper within the first, second, and third mold plates.

### BRIEF DESCRIPTION OF THE DRAWINGS

The above-mentioned and other features and advantages of this disclosure, and the manner of attaining them, will become more apparent and the disclosure itself will be better understood by reference to the following descriptions of embodiments of the disclosure taken in conjunction with the accompanying drawings, wherein:
Fig. 1 is a side view of an example of a stopper constructed in accordance with the principles of the present invention.
Fig. 2 is a side view of an example of a rib of a stopper constructed in accordance with the principles of the present invention.
Fig. 3 is a side view of another example of a rib of a stopper constructed in accordance with the principles of the present invention.
Fig. 4 is a side view of an example of a mold assembly for a stopper constructed in accordance with the principles of the present invention.
Fig. 5 is a side view of a retracted configuration of the mold assembly of Fig. 4.

### DESCRIPTION OF THE INVENTION

The following description is provided to enable those skilled in the art to make and use the described embodiments contemplated for carrying out the invention. Various modifications, equivalents, variations, and alternatives, however, will remain readily apparent to those skilled in the art. Any and all such modifications, variations, equivalents, and alternatives are intended to fall within the spirit and scope of the present invention.

For purposes of the description hereinafter, the terms "upper", "lower", "right", "left", "vertical", "horizontal", "top", "bottom", "lateral", "longitudinal", and derivatives thereof shall relate to the concept as it is oriented in the drawing figures. However, it is to be understood that the concept may assume various alternative variations, except where expressly specified to the contrary. It is also to be understood that the specific devices illustrated in the attached drawings, and described in the following specification, are simply exemplary embodiments of the concept. Hence, specific dimensions and other physical characteristics related to the embodiments disclosed herein are not to be considered as limiting.

The word "comprising" and "comprises", and the like, does not exclude the presence of elements or steps other than those listed in any claim or the specification as a whole. In the present specification, "comprises" means "includes" and "comprising" means "including."

As used herein, "at least one of" is synonymous with "one or more of." For example, the phrase "at least one of A, B, or C" means any one of A, B, or C, or any combination of any two or more of A, B, or C. For example, "at least one of A, B, and C" includes A alone; or B alone; or C alone; or A and B; or A and C; or B and C; or all of A, B, and C.

The term "at least" is synonymous with "greater than or equal to." The terms "first", "second", and the like are not intended to refer to any particular order or chronology, but refer to different conditions, properties, or elements. As used herein, the singular form of "a", "an", and "the" include plural referents unless the context clearly dictates otherwise.

All numbers used in the specification and claims are to be understood as being modified in all instances by the term "about". By "about" is meant within plus or minus twenty-five percent of the stated value. However, this should not be considered as limiting to any analysis of the values under the doctrine of equivalents.

Unless otherwise indicated, all ranges or ratios disclosed herein are to be understood to encompass the beginning and ending values and any and all subranges or subratios subsumed therein. For example, a stated range or ratio of "1 to 10" should be considered to include any and all subranges or subratios between (and inclusive of) the minimum value of 1 and the maximum value of 10; that is, all subranges or subratios beginning with a minimum value of 1 or more and ending with a maximum value of 10 or less. The ranges and/or ratios disclosed herein represent the average values over the specified range and/or ratio.

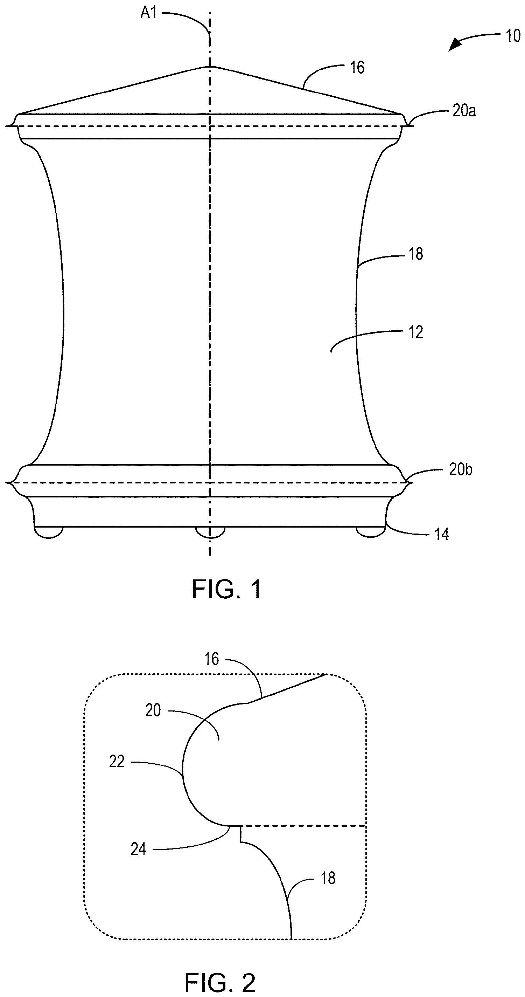

Reference is now made to Fig. 1 which shows a stopper, generally indicated as 10, adapted for attachment with a plunger rod (not shown) for use within a syringe barrel (not shown) in accordance with an embodiment of the disclosure. The stopper 10 generally includes or defines a main body 12 with a proximal end 14, a distal end 16, and a cylindrical sidewall 18 extending between the proximal end 14 and the distal end 16. The stopper defines or includes a longitudinal axis A1 extending along a length thereof between the proximal end 14 and the distal end 16.

The proximal end 14 may be open or otherwise define a feature, such as threading or other engageable mechanism, adapted to receive an attachment portion (not shown) of the plunger rod or other actuating, dispensing mechanism. The distal end 16 may be conically shaped or otherwise configured to interact with and dispense a substance from a syringe barrel.

The stopper 10 may be constructed from one or more compressible materials or elastomers including but not limited to butyl rubber, styrene butadiene rubber, poly isoprene rubber, liquid silicone rubber, thermoplastic elastomer (TPE), and the like. Optionally, one or more portions of the stopper 10, such as the distal end 16 for example, may include a coating that acts as a barrier between the stopper 10 and the pharmaceutical or chemical composition that occupies the syringe barrel or container in use. The coating may reduce extraction and/or leaching of substances from the stopper material into the pharmaceutical or chemical composition, and vice versa. Such coatings may include, for example, silicone oil, PTFE, ETFE, liquid silicone rubber, and the like.

Now referring to Figs. 1-2, the stopper 10 may further include at least one rib extending radially outward around a perimeter of the main body 12 configured to ensure the seal of the stopper 10 with the barrel or container in which the stopper 10 is positioned. The presence of a plurality of ribs may ensure or improve container closure integrity. In one example, the stopper 10 may include or define a first rib 20a adjacent to and/or in proximity to the distal end 16, and a second rib 20b adjacent to and/or in proximity to the proximal end 14. In other examples, additional ribs may be included along the length of the main body 12 (the one or more ribs collectively referred to hereinafter as '20').

One or more of the ribs 20 may define the widest diameter of the main body 12 of the stopper 10. In one example, a portion or length of the sidewall 18 extending between the first and second ribs 20a, 20b may be contoured inward or otherwise have a smaller diameter than the first and second ribs 20a, 20b. In another aspect, the portions of the main body 12 of the stopper extending from the first rib 20a to the distal end 16, and from the second rib 20a to the proximal end 14, may recede, taper, or otherwise have a smaller diameter of the first rib 20a and/or second rib 20b.

The one or more ribs 20 may be sized and/or shaped for a desired interference, seal, and gliding performance for a designated container or syringe, examples of which are shown in Figs. 2-3. Each of the one or more ribs 20 may define or include a contoured or tapered contact surface 22 defining the radially, outer-most surface configured to contact the inner walls of a syringe or other container. In one example, the contact surface may be convex with a substantially constant radius of curvature. In another example, the contact surface may be contoured with varying and/or serpentine radii of curvature.

Each of the one or more ribs 20 may define or include a substantially planar or linear surface 24 oriented substantially perpendicular or transverse to the longitudinal axis A1 of the stopper body 12. The surface 24 may extend from or otherwise connect to the contact surface 22. The surface 24 may be longitudinally positioned between the contact surfaces 22 of adjacent ribs. For example, the surface 24 of the first rib 20a may be positioned on a proximal side or region of the first rib 20a. In another example, the surface 24 of the second rib 20b may be positioned on a distal side or region of the second rib 20b. The surface 24 of each rib 20 may be longitudinally positioned (relative to the contact surface 22) away from the nearest proximal end 14 or distal end 16 of the stopper body 12 and oriented towards a center or midline of the stopper body 12.

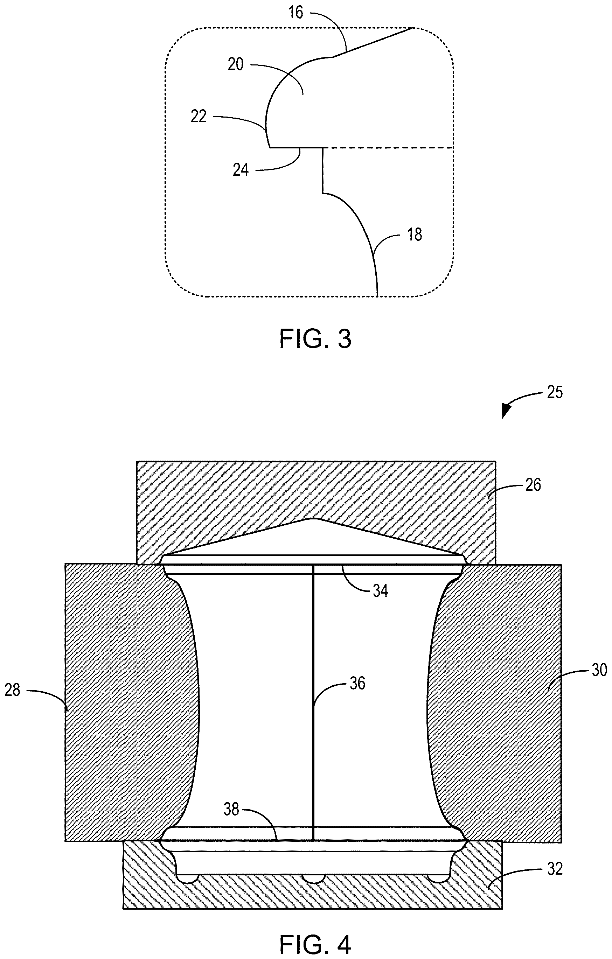

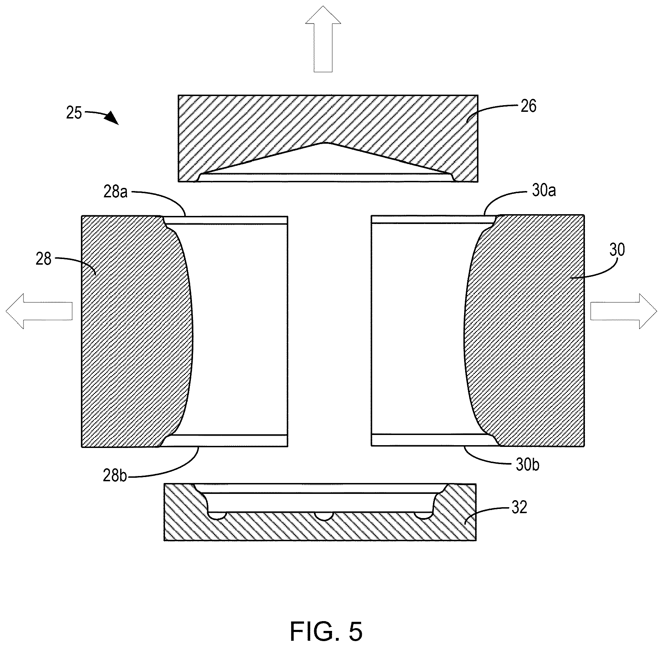

The stopper 10 may be formed from a mold assembly or system 25 comprising a plurality of mold components or plates, as shown in Figs. 4-5. The surface 24 of the one or more ribs 20 may be formed by a respective surface of a mold component forming a joint, seam, or otherwise abutting another mold component to reduce or eliminate the likelihood of forming an excess flash interfering with or traversing a contact surface of the stopper 10. For example, the mold assembly 25 may include a first mold plate 26 generally sized and shaped with a cavity or space therein to form the distal end 16 of the stopper 10. The first mold plate 26 may be configured or oriented to retract and compress in a direction substantially parallel to the longitudinal axis A1.

The mold assembly 25 may include a second mold plate 28 and a third mold plate 30 generally sized and shaped with a cavity or space therein to form a middle portion or segment of the stopper 10 between the proximal end 14 and the distal end 16. The second and third mold plates 28, 30 may be configured or oriented to retract and compress in a direction substantially perpendicular to the longitudinal axis A1.

The mold assembly 25 may include a fourth mold plate 32 generally sized and shaped with a cavity or space therein to form the proximal end 14 for the stopper 10. The fourth mold plate 32 may be configured or oriented to retract and compress in a direction substantially parallel to the longitudinal axis A1.

When assembled and/or compressed, the first mold plate 26 forms a first joint or split line 34 with the second mold plate 28 and the third mold plate 30 substantially perpendicular to the longitudinal axis A1. When assembled and/or compressed, the second mold plate 28 forms a second joint or split line 36 with the third mold plate 30 substantially parallel to the longitudinal axis A1. When assembled and/or compressed, the fourth mold plate 32 forms a third joint or split line 38 with the second mold plate 28 and the third mold plate 30 substantially perpendicular to the longitudinal axis A1.

The first joint 34 may be coplanar, parallel, and/or otherwise aligned and configured to form at least a portion of the surface 24 of the one or more ribs of the stopper 10. For example, the first mold plate 26 may be configured to form the contact surface 22 of the first rib 20a proximate or adjacent to the distal end 16 of the stopper, while an upper or distal surface 28a of the second mold plate 28 and an upper or distal surface 30a of the third mold plate 30 combine to form the surface 24 of the first rib 20a. Any resulting flash or material excess formed from the first joint 34 is circumferentially oriented with a smaller diameter than the contract surface 22 of the first rib 20a, with a reduced or eliminated likelihood of interfering with a sealing or gliding surface of the stopper 10.

The second joint 36 extends longitudinally across a smaller diameter portion of the main body 12 of the stopper 10, and does not traverse the outer diameter and/or contact surfaces 22 of the one or more ribs 20, which reduces or eliminates the likelihood of interfering with a sealing or gliding surface of the stopper 10.

Similar to the first j oint 34, the third j oint 38 may be coplanar, parallel, and/or otherwise aligned and configured to form at least a portion of the surface 24 of the one or more ribs of the stopper 10. For example, the fourth mold plate 32 may be configured to form the contact surface 22 of the second rib 20b proximate or adjacent to the proximal end 14 of the stopper 10, while a lower or proximal surface 28b of the second mold plate 28 and a lower or proximal surface 30b of the third mold plate 30 combine to form the surface 24 of the second rib 20b. Any resulting flash or material excess formed from the third joint 38 is circumferentially oriented with a smaller diameter than the contract surface 22 of the second rib 20b, with a reduced or eliminated likelihood of interfering with a sealing or gliding surface of the stopper 10.

In an exemplary method of manufacturing the stopper 10 (or similar sealing elements, gaskets, etc.), a thermoplastic material may be placed into one or more of the cavities defined by one or more of the first, second, third, and/or fourth mold plates. The thermoplastic material may include, for example, plastic beads, pellets, or other raw materials in a suitable pre-molding form. The mold plates may be assembled, compressed, and/or otherwise aligned as disclosed herein. Pressure and/or heat may be applied to the thermoplastic material within the cavities of the mold plates to form the stopper 10 having the features disclosed herein.

The various mold plates may then be retracted or removed from the molded stopper 10 in the axial and radial directions disclosed herein to limit or prevent the formation of excess molding flash at or along the joints, which are compartmentalized or limited to non-contact surfaces of the stopper 10. As a result, the stopper 10 may not require post-molding processes to sand, smooth, trim or otherwise remove excess flash from critical surfaces of the molded stopper. Moreover, the stopper 10 may be readily implemented into low lubricant and/or lubricant-free applications with a particular syringe or injection cartridge.

It will be appreciated by persons skilled in the art that the present disclosure is not limited to what has been particularly shown and described herein above. In addition, unless mention was made above to the contrary, it should be noted that all of the accompanying drawings are not to scale. Of note, the system components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein. Moreover, while certain embodiments or figures described herein may illustrate features not expressly indicated on other figures or embodiments, it is understood that the features and components of the examples disclosed herein are not necessarily exclusive of each other and may be included in a variety of different combinations or configurations without departing from the scope and spirit of the disclosure. A variety of modifications and variations are possible in light of the above teachings without departing from the scope and spirit of the disclosure, which is limited only by the following claims.

## Claims

1. A mold assembly (25) for forming a stopper (10), comprising:
a first mold plate (26) defining a cavity therein configured to form a distal end of the stopper and at least a portion of a first rib (20a) extending around a perimeter of the stopper;
a second mold plate (28) defining a cavity therein configured to form a portion of the stopper, and a distal surface that abuts at least a portion of the first mold plate, wherein the distal surface is configured to form a first portion of a substantially planar surface of the first rib; and
a third mold plate (30) defining a cavity therein configured to form a portion of the stopper, and a distal surface that abuts at least a portion of the first mold plate, wherein the distal surface of the third mold plate is configured to form a second portion of the substantially planar surface of the first rib.

2. The mold assembly (25) of claim 1, wherein the distal surfaces of each of the second and third mold plates (28, 30) are planar and substantially perpendicular to a longitudinal axis of the stopper (10).

3. The mold assembly (25) of any of claims 1-2, wherein the first mold plate (26) is movable with respect to the second mold plate (28) in a direction substantially parallel to a longitudinal axis of the stopper (10).

4. The mold assembly (25) of claim 3, wherein the second mold plate (28) is movable with respect to the third mold plate (30) in a direction substantially perpendicular to the longitudinal axis of the stopper (10).

5. The mold assembly (25) of any of claims 1-4, wherein the second and third mold plates (28, 30) combine to form a first joint with the first mold plate (26), and wherein the first joint extends around a portion of the stopper (10) with a diameter less than a diameter of the first rib (20a).

6. The mold assembly (25) of claim 5, wherein the first joint is substantially perpendicular to a longitudinal axis of the stopper (10).

7. The mold assembly (25) of any of claims 5-6, wherein the second mold plate (28) is positionable to abut the third mold plate (30) to define a second joint, and wherein the second joint extends across a portion of the stopper (10) with a diameter less than a diameter of the first rib (20a).

8. The mold assembly (25) of claim 7, wherein the second joint is substantially parallel to a longitudinal axis of the stopper (10).

9. The mold assembly (25) of any of claims 1-8, wherein the first mold plate (26) is configured to form a contoured outer surface of the first rib (20a) defining a largest diameter of the stopper (10).

10. The mold assembly (25) of any of claims 1-9, further comprising a fourth mold plate (32) defining a cavity therein configured to form a proximal end of the stopper (10).

11. The mold assembly (25) of claim 10, wherein the second and third mold plates (28, 30) are each movable with respect to the fourth mold plate (32) in a direction substantially parallel to a longitudinal axis of the stopper (10).

12. The mold assembly (25) of any of claims 10-11, wherein the fourth plate (32) is configured to form at least a portion of a second rib (20b) extending around a perimeter of the stopper (10).

13. The mold assembly (25) of claim 12, wherein the second mold plate (28) defines a proximal surface that abuts at least a portion of the fourth mold plate (32), wherein the proximal surface is configured to form a first portion of a substantially planar surface of the second rib (20b); and
wherein the third mold plate (30) defines a proximal surface that abuts at least a portion of the fourth mold plate, and wherein the proximal surface of the third mold plate is configured to form a second portion of the substantially planar surface of the second rib.

14. The mold assembly (25) of claim 13, wherein the proximal surfaces of each of the second and third mold plates (28, 30) are planar and substantially perpendicular to a longitudinal axis of the stopper (10).

15. A method of manufacturing a stopper (10) with the mold assembly (25) of any of claims 1-14, comprising:
depositing a thermoplastic material into at least one of the first mold plate (26), second mold plate (28), or third mold plate (30); and
forming the thermoplastic material into the stopper (10) within the first, second, and third mold plates.
